# EUROPEAN PATENT SPECIFICATION

(11) **EP 2 648 088 B1**
(45) Date of publication and mention of the grant of the patent: **06.05.2020**
(21) Application number: 13161668.2
(22) Date of filing: 28.03.2013
(51) Int. Cl.: G06F 21/10, G06F 3/12

(54) **Information processing apparatus, storage medium, and control method therefor**
Vorrichtung zur Informationsverarbeitung, Speichermedium und Steuerverfahren dafür
Appareil de traitement d'informations, support de stockage et son procédé de commande

(30) Priority: 03.04.2012 JP 2012084971
(43) Date of publication of application: 09.10.2013
(73) Proprietor: CANON KABUSHIKI KAISHA, Ohta-ku Tokyo 146-8501 (JP)
(72) Inventor: Kobashi, Kazufumi, Ohta-ku, Tokyo (JP)
(74) Representative: Uffindell, Christine Helen

(56) References cited:
- US-A1- 2002 021 310
- US-A1- 2009 128 843
- US-A1- 2010 182 642

## Description

### BACKGROUND OF THE INVENTION

### Field of the Invention

The present invention relates to a technique for license management in a program for performing print processing.

### Description of the Related Art

A conventional printing method includes two methods, i.e., a method for receiving an instruction to print a target displayed on an application editing screen from a user after the editing screen of the application is displayed and a method for performing printing without displaying an editing screen upon receiving an external file. In the present specification, processing for displaying an editing screen by the former method is editing screen display processing, and print processing performed by the latter method is external file print processing.

There is a technique for confirming a license for an application when the application is executed. Thus, the application can be prevented from being misused by avoiding executing the application when the license expires or has not yet been authenticated.

Japanese Patent Application Laid-Open No. 2011-164789 discusses a technique for enabling, when a license for an application expires while a function of the application is being executed, the execution of the function that is being executed until the processing ends.

To perform the editing screen display processing in the application, license authentication is required. However, the external file print processing may be executed without performing license authentication (under a free license).

For example, there is a utility application capable of issuing an instruction to perform only the external file print processing. Since the utility application does not display the editing screen, the external file print processing may be desired to be provided to a user by being made executable under a free license. If it is also configured such that the license is confirmed when the utility application is started, however, the license is confirmed even when the utility application has received the external file print processing. When thus configured, the utility application having no license cannot perform the external file print processing.

### SUMMARY OF THE INVENTION

The present invention is directed to providing external file print processing to a user under a free license, to improve convenience.

The present invention in its first aspect provides an information processing apparatus as specified in claims 1 to 6.

The present invention in its second aspect provides a control method as specified in claims 6 to 10.

The present invention in its third aspect provides a program as specified in claim 11.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.
Fig. 1 illustrates an example of a system configuration.
Fig. 2 illustrates an example of a hardware configuration.
Fig. 3 illustrates an example of a software configuration of an information processing apparatus.
Fig. 4 illustrates a file drop operation onto a widget to be started by a virtual printer application and an example of the widget.
Fig. 5 illustrates an example of a main UI of a client application.
Fig. 6 illustrates an example of editing screen display processing/external file print processing in a client application.
Fig. 7 illustrates an example of an execution parameter of a client application.
Fig. 8 illustrates an example of a warning message for license confirmation.
Fig. 9 illustrates an example of a software configuration of an information processing apparatus.
Fig. 10 illustrates an example of a widget to be started by a virtual printer application.
Fig. 11 illustrates an example of editing screen display processing/external file print processing in a client application.
Fig. 12 illustrates an example of an execution parameter of a client application.
Fig. 13 illustrates an example of a warning message for enabling the transition to editing screen display processing in a client application.
Fig. 14 illustrates an example of a warning message for disabling the transition to editing screen display processing in a client application.

### DESCRIPTION OF THE EMBODIMENTS

Various exemplary embodiments, features, and aspects of the invention will be described in detail below with reference to the drawings.

### A first example will be described.

### System Configuration

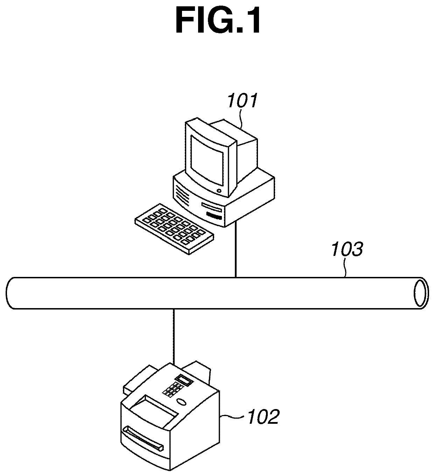

Fig. 1 illustrates an example of a configuration of a system according to example of the present invention. An information processing apparatus 101 is a personal computer (PC) that is used by a user who instructs an image forming apparatus 102 to perform printing and facsimile transmission. The image forming apparatus 102 includes a printer function, a facsimile function, a copy function, a scanner function, and a file transmission function. The information processing apparatus 101 and the image forming apparatus 102 are connected to a local area network (LAN) 103. The apparatuses communicate information with each other via the LAN 103.

### Hardware Configuration

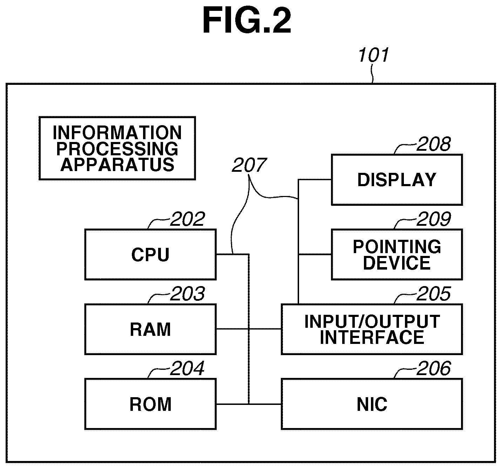

Fig. 2 illustrates an example of a hardware configuration. The information processing apparatus 101 includes various types of units 202 to 207. The central processing unit (CPU) 202 is a unit for executing various types of programs and implementing various functions according to the programs. The read only memory (ROM) 204 is a unit storing various types of programs and data. The random access memory (RAM) 203 is a unit storing various types of information. The RAM 203 is also used as a temporary work storage area of the CPU 202. For example, the CPU 202 loads the programs and the data stored in the ROM 204 into the RAM 203, and executes the programs.

The input/output interface 205 is a unit for receiving data from a pointing device 209 in addition to sending data to a display 208 connected to the information processing apparatus 101.

The network interface card (NIC) 206 is a unit for connecting the information processing apparatus 101 to a network. The above-described units can send and receive the data via the bus 207. The information processing apparatus 101 is connected to the above-mentioned LAN 103 via the NIC 206. Software Configuration (In General)

A predetermined operating system (OS) is installed into the information processing apparatus 101, and various types of applications for each executing specific functional processing is also installed thereinto. The specific functional processing includes document processing, spreadsheet processing, presentation processing, image processing, and graphics processing. Each of the applications has its own data structure (file structure) . Further, the OS is configured to be capable of referring to an identifier of each of files, to issue a print instruction to the corresponding application.

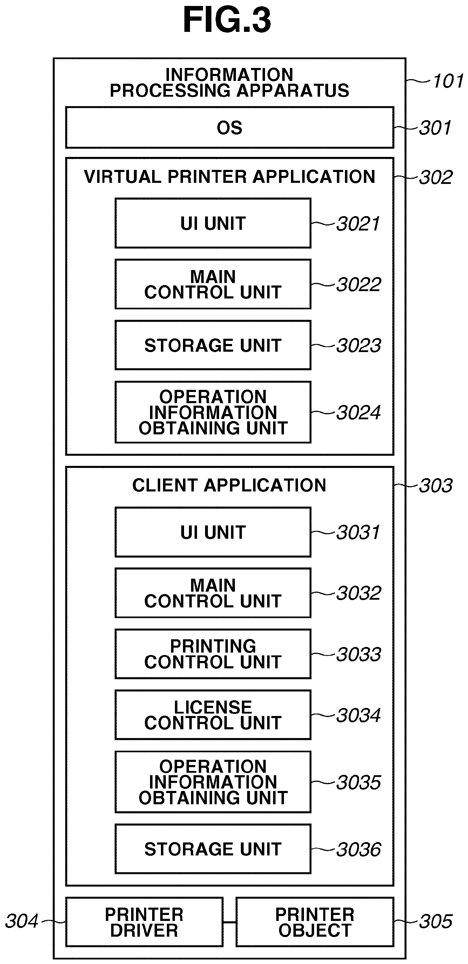

A software configuration of the information processing apparatus 101 will be described below with reference to Fig. 3. Fig. 3 illustrates an example of the software configuration of the information processing apparatus 101.

A program for implementing a function (module) in each of pieces of software illustrated in Fig. 3 is stored in the ROM 204 in the information processing apparatus 101. The pieces of software (applications) respectively represent an OS 301, a virtual printer application 302, a client application 303, and a printer driver 304. More specifically, the CPU 202 loads the program into the RAM 203 and executes the program, to implement the functions of the information processing apparatus 101 and processes relating to a flowchart, described below. All or some of the functions of the information processing apparatus 101 and the processes relating to the flowchart, described below, may be implemented using dedicated hardware.

### Software Configuration (OS)

The OS 301 will be described below. The OS 301 provides known general functions (memory management, resource management, application management, and others) of the OS 301. Upon receiving an application execution request from the user, the OS 301 issues an execution request to each of the applications, so that each of the applications starts processing.

### Software Configuration and UI (Client Application)

The software configuration in the client application 303 will be described below. The client application 303 is configured with various types of modules 3031 to 3036.

The main control unit 3032 controls the client application 303 to issue an instruction to and manage each of the modules, described below. The UI unit 3031 provides a user interface (UI) of the client application 303 to the user in response to a display instruction from the main control unit 3032. The main control unit 3032 issues an instruction to display a main UI 501 serving as an editing screen, described below, to the UI unit 3031 upon receiving editing screen display processing.

The operation information obtaining unit 3035 obtains information indicating that the UI of the client application 303, which has been displayed by the UI unit 3031, is operated by the user, and notifies the obtained information to the main control unit 3032. The main control unit 3032 stores the notified information in the storage unit 3036.

The printing control unit 3033 obtains print setting information from the printer object 305 corresponding to the printer driver 304, as described below, and notifies the main control unit 3032 of the obtained information. The printing control unit 3033 receives an instruction from the main control unit 3032. The printing control unit 3033 then converts a document file into a graphic device interface (GDI) via a portable document format (PDF) using a method, described below, to output the GDI to the printer driver 304. The main control unit 3032 does not issue a display instruction to the UI 3031 but issues a print instruction to the printing control unit 3033 upon receiving external file print processing.

The document file in the present specification may be data generated by a word processor or the like, or may be an image file.

The license control unit 3034 confirms whether license information for executing the client application 303 exists upon receiving an instruction from the main control unit 3032 that has received an execution instruction from the OS 301.

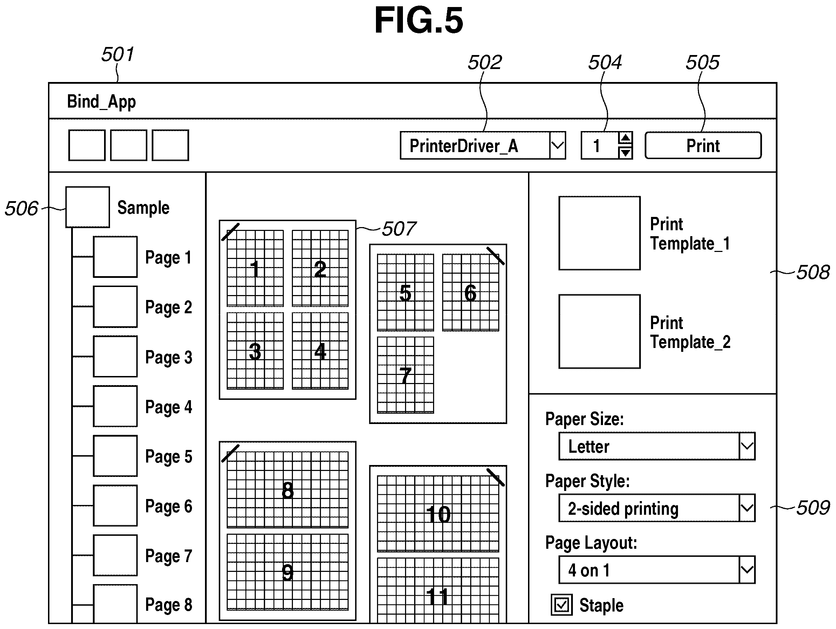

Fig. 5 illustrates an example of the main UI 501 in the client application 303. The main UI 501 includes an output destination selection control 502 and an output copy number control 504. The output destination selection control 502 displays a list of printer objects, which have been installed into the ROM 204, as options, and determines an output destination according to an instruction from the user.

The main UI 501 further includes a print button 505. The print button 505 receives from the user a print instruction based on a file to be opened by the client application 303. More specifically, when the print button 505 is pressed, the document file is converted in response to the instruction from the user, and converted data is processed by a printer driver at the output destination.

The main UI 501 further includes a list of pages 506 of the document file, and a print preview 507 corresponding to the document file.

The main UI 501 further includes a print template control 508. A print template retains setting values of various print settings. The print template is saved as a file, and is stored in the ROM 204. By pressing the print template button, the retained setting values of the print settings of a plurality of items can be simultaneously set at one time. In the above-described print preview, a state of an output result is thumbnailed according to the setting value designated by the print template control. The print preview allows the user to confirm the output state before printing is performed.

The main control 501 further includes a print setting control 509. The print setting control 509 is a display element (control) that individually receives print settings in a plurality of print setting items, i.e., "sheet size", "one-sided/two-sided", and "stapler" from the user.

Further, the main UI 501 may provide the following functions. The first function is a function of appending an annotation to a document file to be opened by the client application 303. The second function is a function of merging the document file that is opened by the client application 303. The third function is a function of editing objects of a plurality of document files. The fourth function is a function of outputting a PDF based on a document file to be opened by the client application 303.

The main UI 501 has at least one of the above-described functions (the control and the four functions).

Forms (a position, a size, a range, an arrangement, a display content, etc.) of the UI of the client application 303 are not limited to the forms illustrated in Fig. 5, and can use an appropriate configuration capable of implementing the functions of the information processing apparatus 101. Software Configuration and UI (Virtual Printer Application)

The software configuration in the virtual printer application 302 will be described below. The virtual printer application 302 is configured with various types of modules 3021, 3022, 3023, and 3024. The main control unit 3022 controls the virtual printer application 302 to issue an instruction to the UI unit 3021 and issue a print instruction to the client application 303.

The main control unit 3022 instructs the UI unit 3021 to display a widget 401, described below, upon receiving editing screen display processing in the virtual printer application 302. The UI unit 3021 provides the widget 401 serving as the UI of the virtual printer application 302 to the user in response to a display instruction from the main control unit 3022. A module, different from the UI unit 3021, in the OS 301 may display the widget 401.

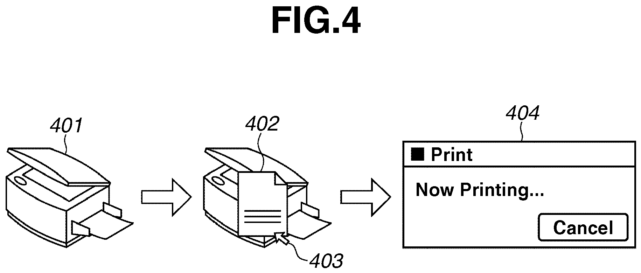

Fig. 4 illustrates a file drop operation onto the widget 401 to be started by the virtual printer application 302 and an example of the widget 401. The widget 401 is displayed on a desktop of the OS 301. The virtual printer application 302 associates the printer objects, which have been installed into the OS 301, with the widget 401, and displays the widget 401 for each of the associated printer objects. The main control unit 3022 stores a file path of a document file 402 to be managed by the OS 301 in the storage unit 3023 when the document file 402 is dragged and dropped onto the widget 401 using a mouse pointer 403 to be operated by a pointing device or the like.

The widget 401 may be associated with the printer object of a printer and the printer object of a facsimile, to make the user select to which of the printer and the facsimile the document file 402 is output when dragged onto the widget 401.

The main control unit 3022 designates the printer object, which has been associated with the stored file path, and instructs the client application 303 to perform external file print processing. After the main control unit 3022 has instructed to perform the external file print processing, the main control unit 3022 instructs the UI unit 3021 to display a sub UI 404.

Thus, in the external file print processing using the widget 401, the processing is processed without displaying the main UI 501.

The operation information obtaining unit 3024 obtains information indicating that the widget 401 to be started by the UI unit 302 and the sub UI 404, which have been displayed by the UI unit 3021, are operated by the user, and notifies the main control unit 3022 of the obtained information.

### Software Configuration (Printer Driver)

The printer driver 304 provides functions (print setting, print data receiving, print job generation, etc.) of a known general printer driver. The printer driver 304 sends, upon receiving the external file print processing from the client application 303, data representing the received print processing to the image forming apparatus 102 after converting the data into a page description language that can be received by the image forming apparatus 102.

### Flow of Editing Screen Display Processing/External File Print Processing

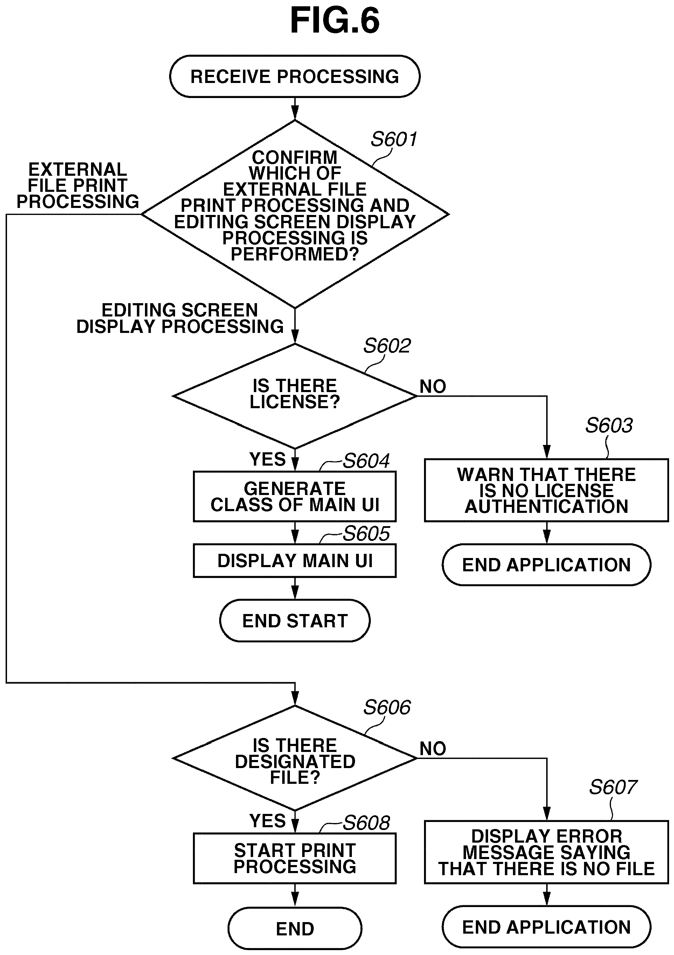

The editing screen display processing/external file print processing in the client application 303 in the information processing apparatus 101 will be described with reference to Fig. 6. Fig. 6 illustrates an example of a flowchart relating to the editing screen display processing/external file print processing from the start of the client application 303.

The main control unit 3032 in the client application 303 starts the editing screen display processing/external file print processing in the client application 303 in response to a request to execute the client application 303 from the OS 301.

In step S601, the main control unit 3032 in the client application 303 confirms which of the editing screen display processing and the external file print processing is requested to be performed from the OS 301. The confirmation is performed using an execution parameter from the OS 301.

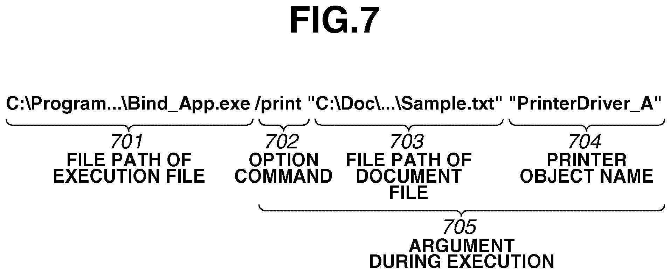

Fig. 7 illustrates an example of the execution parameter during the start of the client application 303. The execution parameter includes a file path 701 of an execution file of the client application 303, an option command "/print" 702 for issuing an instruction to perform the external file print processing in the client application 303, and a file path 703 for designating a document file serving as an execution target of the client application 303.

The execution parameter further includes a printer object name 704 for designating an output destination printer of the client application 303. The option command 702, the file path 703, and the printer object name 704 constitute an argument 705 during execution. The main control unit 3022 in the virtual printer application 302 generates the execution parameter illustrated in Fig. 7 when the main control unit 3022 instructs to perform the external file print processing, to issue an execution request to the OS 301.

The execution parameter of the client application 303 for performing the editing screen display processing is optional. The execution parameter for performing the editing screen display processing may include an option command. In a case where the execution parameter of the client application 303 does not exist, the editing screen display processing may be performed.

In step S601, the main control unit 3032 analyzes the received execution parameter, and determines whether the option command "/print" 702 exists. If the option command "/print" 702 exists, the main control unit 3032 determines that the external file print processing is performed, and the processing proceeds to step S606. If the option command "/print" 702 does not exist, the main control unit 3032 determines that the editing screen display processing is performed, and the processing proceeds to step S602. In step S602, the main control unit 3032 confirms whether there is a license for the client application 303.

The main control unit 3032 instructs the license control unit 3034 to confirm a license, and the license control unit 3034 confirms whether there is a license for displaying the main UI 501 of the client application 303. The main control unit 3032 receives a license confirmation result from the license control unit 3034. If it is determined that there is a license (YES in step S602), the processing proceeds to step S604. If it is determined that there is no license (NO in step S602), the processing proceeds to step S603.

An example of the determination of the presence or absence of a license can include a method for confirming whether license authentication (e.g., authentication using a serial number and a hash value dependent on a PC configuration) is completed and confirming whether license authentication is within a trial period (e.g., 60 days) determined by an application if the license authentication is not completed.

In step S603, the main control unit 3032 displays a message stating that license authentication has not been performed, and ends the editing screen display processing in the client application 303.

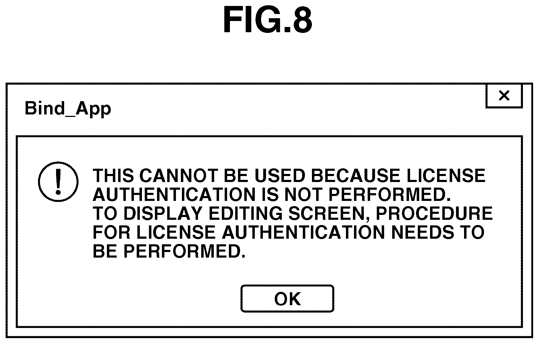

Fig. 8 illustrates an example of a warning message issued in a case where there is no license authentication, which is displayed in step S603.

In step S604, the main control unit 3032 performs processing for generating the class of the main UI 501 in the client application 303. In step S605, the main control unit 3032 instructs the UI unit 3031 to display the main UI 501 the class of which has been generated in step S604. In step S606, the main control unit 3032 confirms whether the document file, which has been designated by the file path 703, exists. If the document file, which has been designated by the file path 703, exists (YES in step S606), the processing proceeds to step S608. If the document file, which has been designated by the file path 703, does not exist (NO in step S606), the processing proceeds to step S607. In step S607, the main control unit 3032 displays an error message stating that a document file to be printed does not exist, and ends the external file print processing in the client application 303. In step S608, the main control unit 3032 transfers the document file, which has been designated by the file path 703, and the output destination printer (printer object name), which has been designated by the printer object name 704, to the printing control unit 3033, to start the external file print processing.

The print setting in step S608 uses an initial setting for the client application 303 or the printer driver 304.

If it is determined that the external file print processing without executing the editing screen display processing is to be performed when the client application 303 is executed, as described above, the processing can be performed without executing a license confirmation. The flow of data conversion in the external file print processing will be supplemented (similar to that in a method discussed in Japanese Patent Application Laid-Open No. 2011-19197). More specifically, the document file, which has been designated by the file path 703, is transferred to an application corresponding thereto, converts the document file into a GDI function (drawing information), and generates a PDF via a PDF generation driver. While a document format of the client application 303 is described as a PDF in the present example, the client application 303 may have another document format. The client application 303 then sets a print setting in the printer driver 304 via a development mode (DEVMODE) structure, converts the above-described PDF into a GDI function, and outputs the GDI function to the printer driver 304. The printer driver 304 then outputs the received GDI function to an image forming apparatus at an output destination after converting the GDI function into a page description language (PDL) that can be received by the image forming apparatus.

A first embodiment will be described. In the following description, the same objects as those in the first example are assigned the same reference numerals, and hence description thereof is omitted, as needed.

### Software Configuration (Virtual Printer Application)

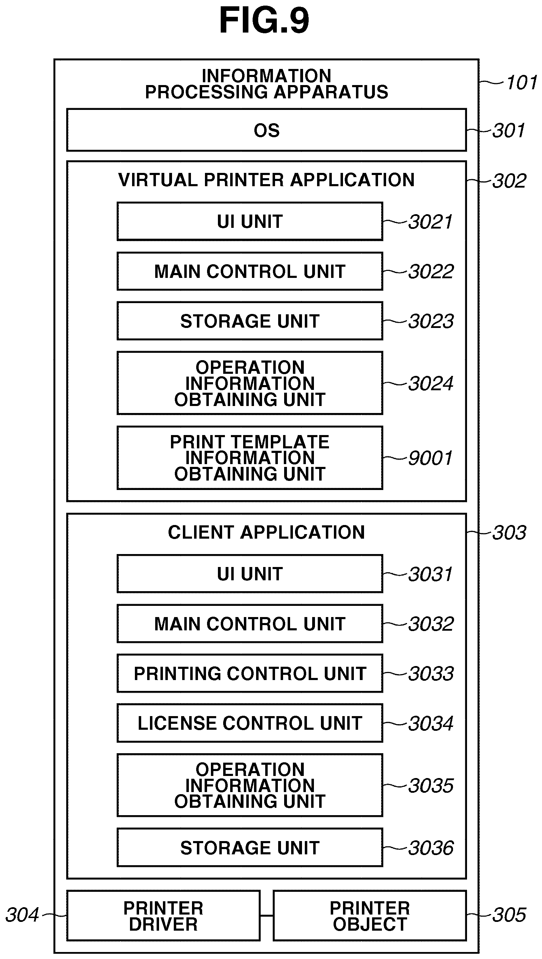

A software configuration of an information processing apparatus 101 will be described with reference to Fig. 9. Fig. 9 illustrates an example of the software configuration of the information processing apparatus 101 according to the present embodiment.

A print template information obtaining unit 9001 in a virtual printer application 302 reads a print template file to be retained by a ROM 204, and obtains a file path and a print template name of the print template file.

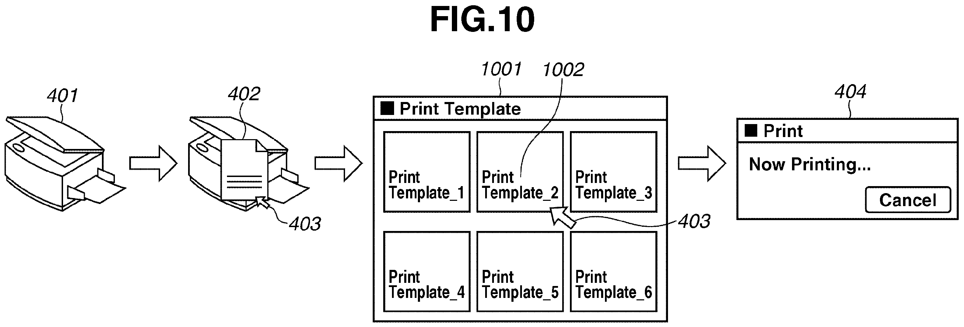

Fig. 10 illustrates an example of the appearance of a print template designation UI 1001 of the virtual printer application 302.

A main control unit 3022 stores a file path of a document file 402 to be managed by an OS 301 using a mouse pointer 403 in a storage unit 3023 when the document file 402 is dragged and dropped onto a widget 401. A main control unit 3022 instructs the UI unit 3021 to display the above-described print template designation UI 1001. The main control unit 3022 obtains print template information via the print template information obtaining unit 9001, and displays a plurality of print template buttons including a print template button 1002 on the print template designation UI 1001.

A print template to be displayed on the print template designation UI 1001 may be a template previously selected to be displayed by a user. More specifically, a print template control 508 in a main UI 501 is used, to individually set which of print templates in the print template control 508 is to be displayed on the print template designation UI 1001.

This can be implemented by providing each of the print templates in the print template control 508 with a check box capable of setting whether the print template is to be displayed on the print template designation UI 1001, for example. A main control unit 3032 saves a list of print templates to be displayed on the print template designation UI 1001 in the storage unit 3023 in the virtual printer application 302 based on checking of the check boxes. The main control unit 3022 can display the print templates based on the check boxes by reading out the print template list from the storage unit 3023.

Further, it may be configured such that always one or more of the print templates may be displayed in setting which of the print templates is to be displayed on the print template designation UI 1001. More specifically, when the check box provided for each of the print templates in the print template control 508 is checked, for example, the print template provided with the checked check box is displayed on the print template designation UI 1001. In this case, it is configured such that if the check boxes provided for the other print templates excluding the one print template are not checked, the one print template is prevented from being unchecked. Thus, a configuration in which always one or more of the print templates, described above, can be displayed is obtained.

The main control unit 3022 stores, upon receiving the press of a desired print template button using the mouse pointer 403 from the user, a print template file name corresponding to the pressed print template button in the storage unit 3023. The main control unit 3022 designates a printer object, which has been associated with the stored file path, and instructs the client application 303 to perform external file print processing.

### Flow of Editing Screen Display Processing/External File Print Processing Involving Dialog Control

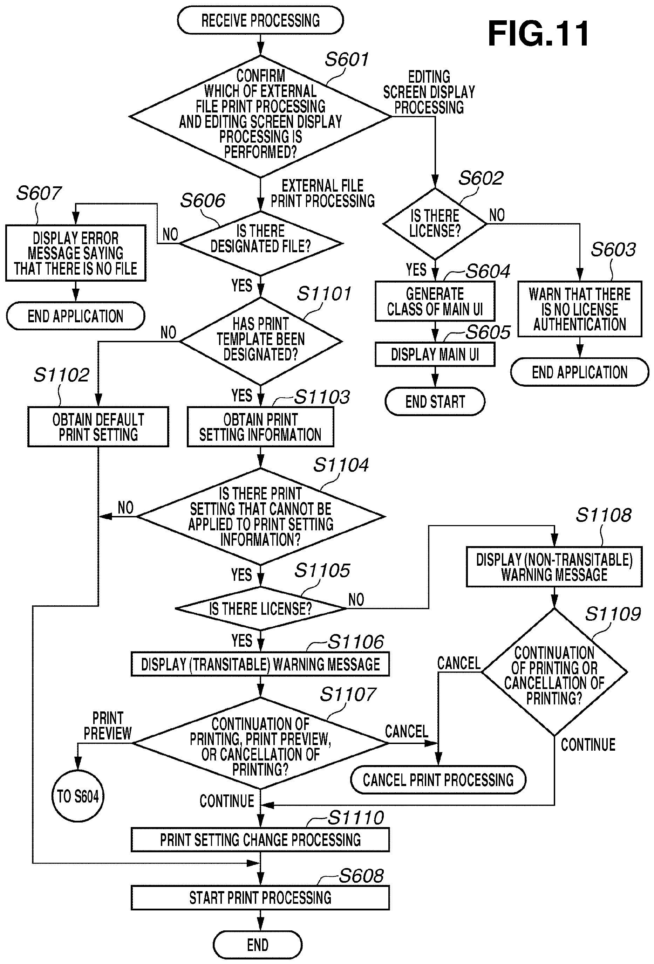

Fig. 11 illustrates an example of a flowchart relating to the editing screen display processing/external file print processing from the start of the client application 303.

If the main control unit 3032 determines that the designated file exists (YES in step S606), the processing proceeds to step S1101. In step S1101, the main control unit 3032 confirms whether a print template has been designated. A method for the confirmation is performed using an execution parameter from the OS 301.

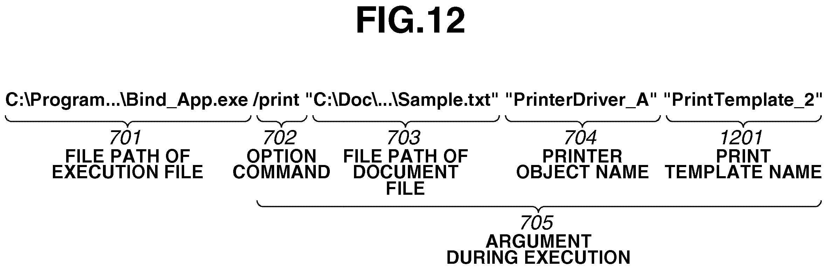

Fig. 12 illustrates an example of an execution parameter of the client application 303. The execution parameter includes a print template name 1201. An option command 702, a file path 703, and a printer object name 704, and the print template name 1201 constitute an argument 705 during execution. The main control unit 3022 in the virtual printer application 302 generates the execution parameter illustrated in Fig. 12 when the main control unit 3022 issues a print instruction to the client application 303.

In step S1101, the main control unit 3032 analyzes the received execution parameter, and determines whether the print template name exists. If the print template name 1201 exists, the main control unit 3032 determines that the print template has been designated (YES in step S1101), and the processing proceeds to step S1103. If the print template name 1201 does not exist, the main control unit 3032 determines that the print template has not been designated (NO in step S1101), and the processing proceeds to step S1102. In step S1102, a printing control unit 3033 obtains a default print setting for the client application 303.

The default print setting means a print setting that is retained as a prescribed value by the client application 303 and can be performed regardless of the type of output printer. For example, a sheet size, a printing method, and a layout are respectively set to "the same as a document size", "one-sided", and "1up", for example.

The printing control unit 3033 stores the obtained default print setting in a storage unit 3036, and the processing proceeds to step S608. On the other hand, in step S1103, the printing control unit 3033 obtains print setting information set in a print template file represented by the print template name 1201, which has been designated by the execution parameter, and stores the obtained print setting information in the storage unit 3036.

In step S1104, the printing control unit 3033 then confirms whether a print setting, which cannot be applied by an image forming apparatus 102, exists in the print setting information that has been obtained in step S1103.

More specifically, the printing control unit 3033 obtains the capability of the model of the image forming apparatus 102 from a printer object 305, and confirms whether all setting values of the print setting information set in the print template file, which has been obtained in step S1103, can be applied. Examples can include a case where a setting value of a sheet size A3 is designated for a model that cannot use the sheet size A3 and a case where a setting value of color printing is designated for a black-and-white printer.

If all the setting values of the print setting information, which has been obtained in step S1103, can be applied (YES in step S1104), the processing proceeds to step S608. If any one of the setting values cannot be applied (NO in step S1104), the processing proceeds to step S1105. In step S1105, the main control unit 3032 confirms a license for the client application 303. Specific processing in step S1105 is the same as that in step S602, and hence description thereof is not repeated. The main control unit 3032 receives a license confirmation result from a license control unit 3034. If it is determined that there is a license (YES in step S1105), the processing proceeds to step S1106. If it is determined that there is no license (NO in step S1105), the processing proceeds to step S1108.

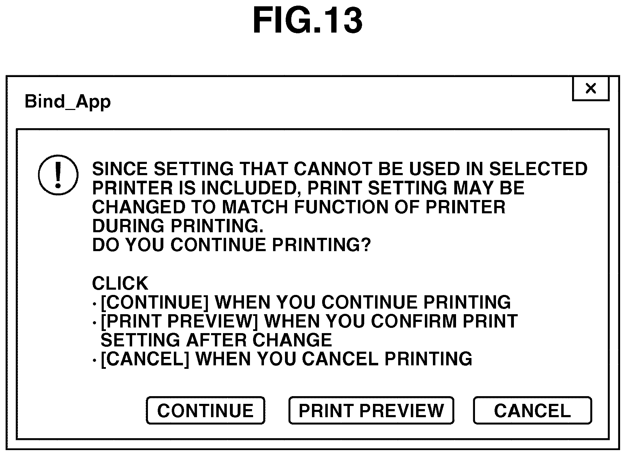

In step S1106, the main control unit 3032 instructs a UI unit 3031 to display a warning message indicating the transition to editing screen display processing in the client application 303 is possible. Fig. 13 illustrates an example of the warning message that is displayed in step S1106. In step S1107, the main control unit 3032 then determines which of options has been selected by the user in the warning message, which the UI unit 3031 has been instructed to display in step S1106. The UI unit 3031 receives the press of a button on the warning message using the mouse pointer 403 by an operation of a pointing device or the like, and notifies the main control unit 3032 that any one of continuation of printing, a print preview, and stop of printing has been selected. If the main control unit 3032 has been instructed to continue printing, the processing proceeds to step S1110. If the main control unit 3032 has been instructed to perform a print preview, the processing proceeds to step S604. If the main control unit 3032 has been instructed to stop printing, the external file print processing is canceled, to end the client application 303. In step S1110, the printing control unit 3033 converts a print setting, which cannot be applied, in the print setting information, which has been obtained in step S1103, into a setting that can be applied. The printing control unit 3033 converts a setting value of the print setting, which cannot be applied, into a setting value in the default print setting, described above in step S1102, to enter a state where there is no print setting that cannot be applied. If the sheet size A3 cannot be used, for example, the setting value of the print setting, which cannot be applied, is converted into the setting value "the same as a document size" of the sheet size in the default print setting.

On the other hand, in step S1108, the main control unit 3032 instructs the UI unit 3031 to display a warning message indicating the transition to the editing screen display processing in the client application 303 is impossible.

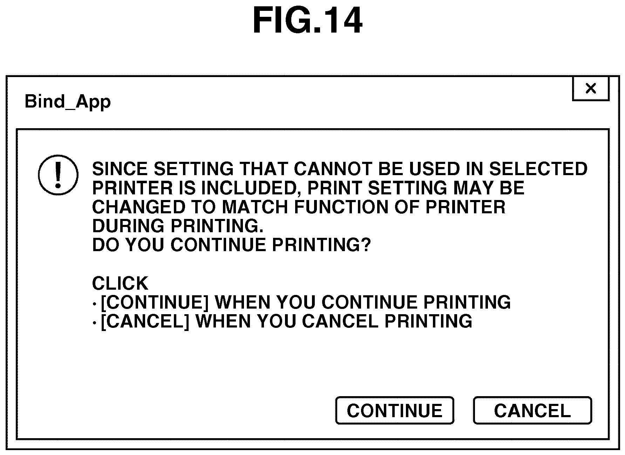

Fig. 14 illustrates an example of the warning message, which the UI unit 3031 is instructed to display in step S1108. The warning message illustrated in Fig. 14 differs from the warning message illustrated in Fig. 13 in that a print preview button is not displayed.

In step S1109, the main control unit 3032 then determines which of options has been selected by the user in the warning message, which the UI unit 3031 has been instructed to display in step S1108. The UI unit 3031 receives the press of the button on the warning message using the mouse pointer 403 by an operation of the pointing device or the like, and notifies the main control unit 3032 that either one of continuation of printing and stop of printing has been selected. If the main control unit 3032 has been instructed to continue printing, the processing proceeds to step S1110. If the main control unit 3032 has been instructed to stop printing, the print processing is canceled, to end the client application 303.

As described above, in a case where the main control unit 3032 skips license confirmation by determining that the external screen print processing in the client application 303 is performed, if the print setting cannot be applied and the transition to the editing screen display processing occurs in the client application 303, the main control unit 3032 performs the license confirmation again. If there is no license during the license confirmation, a button for displaying the main UI 501 is not displayed. Thus, the user can prevent from displaying the main UI 501 despite there being no license.

The configuration according to the above-described embodiment enables the information processing apparatus 101 to be made more easily usable.

While the example and embodiment of the present invention have been described in detail above, it is to be understood that the present invention is not limited to the specific exemplary embodiments. Various modifications and changes are possible within a range of the scope of the present invention described in the claims.

### Advantageous Effect of the Invention

According to the present invention, external file print processing can be provided under a free license so that user's convenience can be improved.

### Other Embodiments

Embodiments of the present invention can also be realized by a computer of a system or apparatus that reads out and executes computer executable instructions recorded on a storage medium (e.g., non-transitory computer-readable storage medium) to perform the functions of one or more of the above-described embodiment (s) of the present invention, and by a method performed by the computer of the system or apparatus by, for example, reading out and executing the computer executable instructions from the storage medium to perform the functions of one or more of the above-described embodiment (s) . The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

## Claims

1. An information processing apparatus comprising
execution means configured, based on dropping a file onto one of several objects each of which is associated with a respective image forming apparatus, to display a screen for selecting a print template from among a plurality of print templates comprising a plurality of print settings, and, without displaying a main user interface, UI, (501), to execute print processing of the file in accordance with the selected print template;
obtaining means configured to obtain, from a printer object within the information processing apparatus, the capability of the model of the image forming apparatus associated with the object on which the file is dropped;
first determination means configured to determine, using the obtained capability information, whether or not the image forming apparatus has the capability to apply the plurality of print settings corresponding to the selected print template;
second determination means configured to determine whether or not there is a license for displaying the main UI (501) of a client application (303) installed in the information processing apparatus;
wherein, if it is determined by the first determination means that the image forming apparatus does not have the capability to apply one or more print settings, the execution means is configured to cause the second determination means to determine whether or not there is the license, and
wherein, if it is determined by the second determination means that there is the license, a message including a button for displaying the main UI (501) is displayed thereby allowing a user to access the main UI to set print settings and to select an image forming apparatus under which print processing is to be executed.

2. The information processing apparatus according to claim 1, wherein a control means determines whether an instruction for an external printing processing has been received from the user based on an argument of the client application (303).

3. The information processing apparatus according to claim 1, wherein, if it is determined by the second determination means that there is no license, the message including a button for displaying the main UI is not displayed.

4. The information processing apparatus according to claim 1 or 2, wherein the message further includes a button for executing print processing by a printing control unit (3033) that is configured to convert a print setting to a default print setting that the image forming apparatus does have the capability to apply.

5. The information processing apparatus according to claim 4 or 5, wherein, if it is determined by the first determination means that the image forming apparatus has the capability to apply the plurality of print settings corresponding to the selected print template, the execution means executes print processing in accordance with the plurality of print settings corresponding to the print template.

6. A control method comprising
an execution step, based on dropping a file onto one of several objects each of which is associated with a respective image forming apparatus, to display a screen for selecting a print template from among a plurality of print templates comprising a plurality of print settings, and, without displaying a main user interface, UI, (501), to execute print processing of the file in accordance with the selected print template;
an obtaining step to obtain, from a printer object within an information processing apparatus, the capability of the model of the image forming apparatus associated with the object on which the file is dropped;
first determination step to determine, using the obtained capability information, whether or not the image forming apparatus has the capability to apply the print settings included among the plurality of print settings corresponding to the selected print template;
second determination step to determine whether or not there is a license for displaying the main UI (501) of a client application (303) installed in the information processing apparatus;
wherein, if it is determined by the first determination step that the image forming apparatus does not have the capability to apply the one or more print settings, the execution step causes the second determination step to be implemented to determine whether or not there is the license, and
wherein, if it is determined by the second determination step that there is the license, a message including a button for displaying the main UI is displayed thereby allowing a user to access the main UI to set print settings and to select an image forming apparatus under which print processing is to be executed.

7. The information processing method according to claim 6, wherein, if it is determined by the second determination step that there is no license, the message including a button for displaying the main UI is not displayed.

8. The information processing method according to claim 6, wherein the message further includes a button for executing print processing by a printing control unit (3033) that converts a print setting to a default print setting that the image forming apparatus does have the capability to apply.

9. The information processing method according to claim 6 or 8, wherein, if it is determined by the first determination step that the image forming apparatus has the capability to apply the plurality of print settings corresponding to the selected print template, the execution step executes print processing in accordance with the plurality of print settings corresponding to the print template.

10. The control method according to claim 6 or 7, wherein a control step determines whether an instruction for external printing processing has been received from the user based on an argument of the client application (303).

11. A computer program comprising instructions which, when the program is executed by a computer, cause the computer to carry out the control method according to claim 6.

12. A computer-readable storage medium comprising instructions which, when executed by a computer, cause the computer to carry out the method of claim 6.

## Patentansprüche

1. Informationsverarbeitungsvorrichtung, umfassend:
eine Ausführungseinrichtung, die eingerichtet ist, basierend auf einem Ablegen einer Datei auf eines von mehreren Objekten, die jeweils einer entsprechenden Bilderzeugungsvorrichtung zugeordnet sind, einen Bildschirm zum Auswählen einer Druckvorlage aus mehreren Druckvorlagen, die mehrere Druckeinstellungen umfassen, anzuzeigen, sowie ohne Anzeigen einer Hauptbenutzerschnittstelle, UI, (501) eine Druckverarbeitung der Datei gemäß der ausgewählten Druckvorlage auszuführen;
eine Ermittlungseinrichtung, die eingerichtet ist, von einem Druckerobjekt innerhalb der Informationsverarbeitungsvorrichtung die Fähigkeit des Modells der Bilderzeugungsvorrichtung zu ermitteln, die dem Objekt zugeordnet ist, auf das die Datei abgelegt wird;
eine erste Bestimmungseinrichtung, die eingerichtet ist, unter Verwendung der ermittelten Fähigkeitsinformation zu bestimmen, ob die Bilderzeugungsvorrichtung die Fähigkeit aufweist, die der ausgewählten Druckvorlage entsprechenden mehreren Druckeinstellungen anzuwenden oder nicht; sowie
eine zweite Bestimmungseinrichtung, die eingerichtet ist, zu bestimmen, ob eine Lizenz zum Anzeigen der Haupt-UI (501) einer in der Informationsverarbeitungsvorrichtung installierten Clientanwendung (303) vorhanden ist oder nicht;
wobei, falls durch die erste Bestimmungseinrichtung bestimmt wird, dass die Bilderzeugungsvorrichtung nicht die Fähigkeit aufweist, eine oder mehrere Druckeinstellungen anzuwenden, die Ausführungseinrichtung eingerichtet ist, die zweite Bestimmungseinrichtung zu veranlassen, zu bestimmen, ob die Lizenz vorhanden ist oder nicht, und
wobei, falls durch die zweite Bestimmungseinrichtung bestimmt wird, dass die Lizenz vorhanden ist, eine ein Bedienelement zum Anzeigen der Haupt-UI (501) enthaltende Nachricht angezeigt wird, um dadurch einem Benutzer zu ermöglichen, auf die Haupt-UI zuzugreifen, um Druckeinstellungen einzustellen und eine Bilderzeugungsvorrichtung auszuwählen, unter der eine Druckverarbeitung ausgeführt werden soll.

2. Informationsverarbeitungsvorrichtung nach Anspruch 1,
wobei eine Steuerungseinrichtung basierend auf einem Argument der Clientanwendung (303) bestimmt, ob ein Befehl für eine externe Druckverarbeitung vom Benutzer empfangen worden ist.

3. Informationsverarbeitungsvorrichtung nach Anspruch 1,
wobei die ein Bedienelement zum Anzeigen der Haupt-UI enthaltende Nachricht nicht angezeigt wird, falls durch die zweite Bestimmungseinrichtung bestimmt wird, dass keine Lizenz vorhanden ist.

4. Informationsverarbeitungsvorrichtung nach Anspruch 1 oder 2,
wobei die Nachricht weiterhin ein Bedienelement zum Ausführen einer Druckverarbeitung durch eine Drucksteuerungseinheit (3033) beinhaltet, die eingerichtet ist, eine Druckeinstellung in eine Standarddruckeinstellung umzuwandeln, welche die Bilderzeugungsvorrichtung anwenden kann.

5. Informationsverarbeitungsvorrichtung nach Anspruch 4 oder 5,
wobei, falls durch die erste Bestimmungseinrichtung bestimmt wird, dass die Bilderzeugungsvorrichtung die Fähigkeit aufweist, die der ausgewählten Druckvorlage entsprechenden mehreren Druckeinstellungen anzuwenden, die Ausführungseinrichtung eine Druckverarbeitung gemäß den der Druckvorlage entsprechenden mehreren Druckeinstellungen ausführt.

6. Steuerverfahren umfassend:
einen Ausführungsschritt, um basierend auf einem Ablegen einer Datei auf eines von mehreren Objekten, die jeweils einer entsprechenden Bilderzeugungsvorrichtung zugeordnet sind, einen Bildschirm zum Auswählen einer Druckvorlage aus mehreren Druckvorlagen, die mehrere Druckeinstellungen umfassen, anzuzeigen, und um ohne Anzeigen einer Hauptbenutzerschnittstelle, UI, (501), eine Druckverarbeitung der Datei gemäß der ausgewählten Druckvorlage auszuführen;
einen Ermittlungsschritt, um von einem Druckerobjekt innerhalb einer Informationsverarbeitungsvorrichtung die Fähigkeit des Modells der Bilderzeugungsvorrichtung zu ermitteln, die dem Objekt zugeordnet ist, auf das die Datei abgelegt wird;
einen ersten Bestimmungsschritt, um unter Verwendung der ermittelten Fähigkeitsinformation zu bestimmen, ob die Bilderzeugungsvorrichtung die Fähigkeit aufweist, die Druckeinstellungen anzuwenden, die unter den der ausgewählten Druckvorlage entsprechenden mehreren Druckeinstellungen enthalten sind, oder nicht; sowie
einen zweiten Bestimmungsschritt, um zu bestimmen, ob eine Lizenz zum Anzeigen der Haupt-UI (501) einer in der Informationsverarbeitungsvorrichtung installierten Clientanwendung (303) vorhanden ist oder nicht;
wobei, falls durch den ersten Bestimmungsschritt bestimmt wird, dass die Bilderzeugungsvorrichtung nicht die Fähigkeit aufweist, die eine oder mehreren Druckeinstellungen anzuwenden, der Ausführungsschritt veranlasst, dass der zweite Bestimmungsschritt implementiert wird, um zu bestimmen, ob die Lizenz vorhanden ist oder nicht, und
wobei, falls durch den zweiten Bestimmungsschritt bestimmt wird, dass die Lizenz vorhanden ist, eine ein Bedienelement zum Anzeigen der Haupt-UI enthaltende Nachricht angezeigt wird, um dadurch einem Benutzer zu ermöglichen, auf die Haupt-UI zuzugreifen, um Druckeinstellungen einzustellen und eine Bilderzeugungsvorrichtung auszuwählen, unter der eine Druckverarbeitung ausgeführt werden soll.

7. Informationsverarbeitungsverfahren nach Anspruch 6,
wobei, falls durch den zweiten Bestimmungsschritt bestimmt wird, dass keine Lizenz vorhanden ist, die ein Bedienelement zum Anzeigen der Haupt-UI enthaltende Nachricht nicht angezeigt wird.

8. Informationsverarbeitungsverfahren nach Anspruch 6,
wobei die Nachricht weiterhin ein Bedienelement zum Ausführen einer Druckverarbeitung durch eine Drucksteuerungseinheit (3033) beinhaltet, die eine Druckeinstellung in eine Standarddruckeinstellung umwandelt, welche die Bilderzeugungsvorrichtung anwenden kann.

9. Informationsverarbeitungsverfahren nach Anspruch 6 oder 8,
wobei, falls durch den ersten Bestimmungsschritt bestimmt wird, dass die Bilderzeugungsvorrichtung die Fähigkeit aufweist, die der ausgewählten Druckvorlage entsprechenden mehreren Druckeinstellungen anzuwenden, der Ausführungsschritt eine Druckverarbeitung gemäß den der Druckvorlage entsprechenden mehreren Druckeinstellungen ausführt.

10. Steuerverfahren nach Anspruch 6 oder 7,
wobei ein Steuerungsschritt basierend auf einem Argument der Clientanwendung (303) bestimmt, ob ein Befehl für externe Druckverarbeitung vom Benutzer empfangen worden ist.

11. Computerprogramm, das Befehle umfasst, die, wenn das Programm durch einen Computer ausgeführt wird, den Computer veranlassen, das Steuerverfahren nach Anspruch 6 durchzuführen.

12. Computerlesbares Speichermedium, das Befehle umfasst, die, wenn sie durch einen Computer ausgeführt werden, den Computer veranlassen, das Verfahren von Anspruch 6 durchzuführen.

## Revendications

1. Appareil de traitement d'informations, comprenant :
un dispositif d'exécution configuré, sur la base d'un dépôt d'un fichier sur un ou plusieurs objets, associés individuellement à un appareil de formation d'image respectif, pour afficher un écran de sélection d'un modèle de document d'impression parmi une pluralité de modèles de document d'impression comprenant une pluralité de paramètres d'impression, ainsi que, sans afficher d'interface utilisateur, UI, principale (501), pour exécuter un traitement d'impression du fichier conformément au modèle de document d'impression sélectionné ;
un dispositif d'obtention configuré pour obtenir, d'un objet d'imprimante compris dans l'appareil de traitement d'informations, la capacité du modèle de l'appareil de formation d'image associé à l'objet sur lequel a été déposé le fichier ;
un premier dispositif de détermination configuré pour déterminer, au dispositif des informations de capacité obtenues, si l'appareil de formation d'image a, ou non, la capacité d'appliquer la pluralité de paramètres d'impression correspondant au modèle de document d'impression sélectionné ; ainsi que
un second dispositif de détermination configuré pour déterminer si une licence est, ou non, présente à des fins d'affichage de l'UI principale (501) d'une application client (303) installée dans l'appareil de traitement d'informations ;
dans lequel, s'il est déterminé, par le premier dispositif de détermination, que l'appareil de formation d'image n'a pas la capacité d'appliquer un ou plusieurs paramètres d'impression, le dispositif d'exécution est configuré pour amener le second dispositif de détermination à déterminer la présence, ou non, de la licence, et
dans lequel, si la présence de la licence est déterminée par le second dispositif de détermination, un message comprenant un élément de réglage pour affichage de l'UI principale (501) est affiché, permettant ainsi à un utilisateur d'accéder à l'UI principale pour définir des paramètres d'impression et pour sélectionner un appareil de formation d'image qui devra exécuter un traitement d'impression.

2. Appareil de traitement d'informations selon la revendication 1, dans lequel un dispositif de commande détermine si une instruction de traitement d'impression externe a été reçue de l'utilisateur sur la base d'un argument de l'application de client (303).

3. Appareil de traitement d'informations selon la revendication 1, dans lequel, si l'absence de licence est déterminée par le second dispositif de détermination, le message comprenant un élément de réglage pour affichage de l'UI principale n'est pas affiché.

4. Appareil de traitement d'informations selon la revendication 1 ou 2, dans lequel le message comprend en outre un élément de réglage pour exécution de traitement d'impression par une unité de commande d'impression (3033) qui est configurée pour convertir un paramètre d'impression en un paramètre d'impression par défaut que l'appareil de formation d'image doit avoir la capacité d'appliquer.

5. Appareil de traitement d'informations selon la revendication 4 ou 5, dans lequel, s'il est déterminé, par le premier dispositif de détermination, que l'appareil de formation d'image a la capacité d'appliquer la pluralité de paramètres d'impression correspondant au modèle de document d'impression sélectionné, le dispositif d'exécution exécute un traitement d'impression conformément à la pluralité de paramètres d'impression correspondant au modèle de document d'impression.

6. Procédé de commande, comprenant :
une étape d'exécution, sur la base d'un dépôt d'un fichier sur un ou plusieurs objets, associés individuellement à un appareil de formation d'image respectif, consistant à afficher un écran de sélection d'un modèle de document d'impression parmi une pluralité de modèles de document d'impression comprenant une pluralité de paramètres d'impression, et, sans afficher d'interface utilisateur, UI, principale (501), à exécuter un traitement d'impression du fichier conformément au modèle de document d'impression sélectionné ;
une étape d'obtention consistant à obtenir, d'un objet d'imprimante compris dans l'appareil de traitement d'informations, la capacité du modèle de l'appareil de formation d'image associé à l'objet sur lequel le fichier a été déposé ;
une première étape de détermination consistant à déterminer, au moyen des informations de capacité obtenues, si l'appareil de formation d'image a, ou non, la capacité d'appliquer les paramètres d'impression compris parmi la pluralité de paramètres d'impression correspondant au modèle de document d'impression sélectionné ;
une seconde étape de détermination consistant à déterminer la présence, ou non, d'une licence à des fins d'affichage de l'UI principale (501) d'une application de client (303) installée dans l'appareil de traitement d'informations ;
dans lequel, s'il est déterminé, à la première étape de détermination, que l'appareil de formation d'image n'a pas la capacité d'appliquer les un ou plusieurs paramètres d'impression, l'étape d'exécution amène la seconde étape de détermination devant être mise en œuvre à déterminer la présence, ou non, de la licence, et
dans lequel, si la présence de la licence est déterminée à la seconde étape de détermination, un message comprenant un élément de réglage pour affichage de l'UI principale est affiché, permettant ainsi à un utilisateur d'accéder à l'UI principale pour définir des paramètres d'impression et pour sélectionner un appareil de formation d'image qui exécutera le traitement d'impression.

7. Procédé de traitement d'informations selon la revendication 6, dans lequel, si l'absence de licence est déterminée par la seconde étape de détermination, le message comprenant un élément de réglage pour affichage de l'UI principale n'est pas affiché.

8. Procédé de traitement d'informations selon la revendication 6, dans lequel le message comprend en outre un élément de réglage pour exécution d'un traitement d'impression par une unité de commande d'impression (3033) qui convertit un paramètre d'impression en un paramètre d'impression par défaut que l'appareil de formation d'image doit avoir la capacité d'appliquer.

9. Procédé de traitement d'informations selon la revendication 6 ou 8, dans lequel, s'il est déterminé, par la première étape de détermination, que l'appareil de formation d'image a la capacité d'appliquer la pluralité de paramètres correspondant au modèle de document d'impression sélectionné, l'étape d'exécution exécute un traitement d'impression conformément à la pluralité de paramètres d'impression correspondant au modèle de document d'impression.

10. Procédé de commande selon la revendication 6 ou 7, dans lequel une étape de commande détermine si une instruction destinée au traitement d'impression externe a été reçue de l'utilisateur sur la base d'un argument de l'application de client (303).

11. Programme d'ordinateur comprenant des instructions qui, lorsque le programme est exécuté par un ordinateur, amènent l'ordinateur à mettre en œuvre le procédé de commande selon la revendication 6.

12. Support d'informations lisible par ordinateur comprenant des instructions qui, lorsqu'elles sont exécutées par un ordinateur, amènent l'ordinateur à mettre en œuvre le procédé selon la revendication 6.
